# EUROPEAN PATENT APPLICATION

(11) **EP 4 825 562 A1**
(43) Date of publication of application: **21.10.2026**
(21) Application number: 24903665.8
(22) Date of filing: 10.12.2024
(51) Int. Cl.: B29C 49/78, B29C 49/12

(54) **BLOW MOLDING MACHINE OPERATION CONDITION INFERENCE DEVICE, METHOD, AND PROGRAM, AND LEARNING DEVICE**

(30) Priority: 12.12.2023 JP 2023209035
(71) Applicant: Dai Nippon Printing Co., Ltd., Tokyo 162-8001 (JP)
(72) Inventor: KATO, Hirohisa, Tokyo 162-8001 (JP); HIROSE, Kazuya, Tokyo 162-8001 (JP); SEKINE, Akitomo, Tokyo 162-8001 (JP); TAGUCHI, Kazuya, Tokyo 162-8001 (JP); NAKAJIMA,Hirofumi, Tokyo 162-8001 (JP)
(74) Representative: Müller-Boré & Partner Patentanwälte PartG mbB
(86) International application number: PCT/JP2024/043526
(87) International publication number: WO 2025/127011

(57) **Abstract**

A trained model 73 is prepared in which physical property information of a preform, a bottle molding condition, a measured value of physical property information of a bottle, and a measured value of environmental information when manufacturing the bottle are used as input data, and an operation condition of a blow molding machine is used as output data. By inputting a target value 81a of the physical property information to be satisfied by the bottle after molding, and the physical property information of the preform, the bottle molding condition, and the measured value of the environmental information 81b to the trained model 73, the operation condition (heater output, blow pressure, blow timing, rod speed, cooling water temperature) of the blow molding machine to be set in the blow molding machine for molding the bottle satisfying the target value is inferred.

## Description

### Technical Field

The present invention relates to an operation condition inference device of a blow molding machine, an operation condition inference method of a blow molding machine and a program therefor, and a learning device.

### Background Art

Most of the resin bottles represented by PET bottles are produced by manufacturing a preform having a shape similar to that of a test tube in advance and subjecting the preform to stretch blow molding. A blow molding machine for stretch blow molding is used to stretch the preform and form a bottle (refer to Patent Literature 1 regarding a blow molding machine).

A wide variety of setting items are prepared in the blow molding machine, in each of which setting data (setting value) is set, and the blow molding machine operates according to the setting data. In recent years, the number of types of bottles has been increased, and further, the number of types of preforms has been increased with the demand for weight reduction and utilization of recycled materials. If the type of the bottle or the type of the preform for molding the bottle is different, the setting for the blow molding machine naturally needs to be adjusted (changed). A setting operation of the blow molding machine often depends on intuition and experience of a skilled operator.

### Citation List

### Patent Literature

Patent Literature 1: WO 2019/048419 A

### Summary of Invention

An object of the present invention (disclosure) is to support various settings of a blow molding machine.

An operation condition inference device of a blow molding machine according to at least some embodiments of the present invention (disclosure) is an inference device that infers an operation condition of a blow molding machine that heats a preform by a heater, moves the heated preform to a mold, inserts a stretching rod into the preform to stretch the preform in an axial direction, and stretches the preform outward by supplying a pressurized fluid to the inside of the preform, thereby molding a bottle having an internal cavity, and includes a trained model of which parameters are trained, so that physical property information of a preform or environmental information is used as input data and an operation condition of the blow molding machine is used as output data, and an inference means that infers the operation condition of the blow molding machine to be set in the blow molding machine in order to mold a bottle that satisfies a target value or a target quality, the operation condition being inferred by inputting the target value of the physical property information to be satisfied by the bottle after molding or environmental information to the trained model.

According to the present invention (disclosure), the operation condition of the blow molding machine to be set in the blow molding machine in order to mold the bottle satisfying the target value or the target quality is inferred. The inferred operation condition is based on a trained model of which parameters are trained so that physical property information of the bottle or environmental information is used as input data and an operation condition of the blow molding machine is used as output data. The operation condition of the blow molding machine for molding the bottle having the target physical property information or the target quality can be inferred in a short time without depending on the experience of the operator.

Preferably, the input data further includes at least one of physical property information of the preform and a bottle molding condition. The possibility that the operation condition of the blow molding machine for molding the bottle having the target physical property information or the target quality can be inferred more accurately and with high accuracy is increased.

In one embodiment, the inferred operation condition of the blow molding machine is at least one of a heater output condition for heating the preform and a pressure condition of a fluid supplied to the preform. This is because the heater output and the fluid pressure (blow pressure) greatly affect the physical property or quality of the bottle molded by the blow molding machine. The heater output and/or the fluid pressure to be set in the blow molding machine in order to mold the bottle satisfying the target physical property value or quality is inferred by the trained model. It is possible to increase the certainty that the bottle satisfying the predetermined physical property value target or the quality target can be molded without depending on the experience of the operator.

The inferred operation condition of the blow molding machine may further include a timing condition for supplying the fluid to the preform and/or a speed condition of the stretching rod inserted into the preform in addition to the heater output and the fluid pressure (blow pressure) described above.

Preferably, the input data includes information regarding the presence or absence of an appearance abnormality of the bottle, and the inference means infers an operation condition of the blow molding machine to be set in the blow molding machine in order to mold a bottle that satisfies the target value or the target quality and has no abnormality in appearance. It is possible to infer the operation condition for molding a higher quality bottle.

In one embodiment, the physical property information of the preform includes data regarding the material and weight of the preform. The physical property information of the preform may include data for distinguishing whether the preform is made of a virgin resin or a recycled resin. The physical property information of the preform may further include an intrinsic viscosity (IV) value of the preform.

In another embodiment, the bottle molding condition includes data regarding the capacity and shape of the bottle.

In another embodiment, the physical property information of the bottle includes at least one of an overflow capacity, buckling strength, a total height, a thickness, and a section weight of the bottle.

In another embodiment, the environmental information includes at least one of temperature and humidity around the blow molding machine.

Preferably, the operation condition inference device of the blow molding machine includes a setting means that sets the operation condition of the blow molding machine inferred by the inference means in the blow molding machine. The blow molding machine can be operated according to the inferred operation condition of the blow molding machine.

The present invention (disclosure) also provides a learning device (training device) that generates a trained model suitable for use in a blow operation condition inference device. A learning device according to at least some embodiments of the present invention (disclosure) includes a learning data acquisition means that acquires learning data including an operation condition of a blow molding machine that heats a preform by a heater, moves the heated preform to a mold, inserts a stretching rod into the preform to stretch the preform in an axial direction, and stretches the preform outward by supplying a pressurized fluid to the inside of the preform, thereby molding a bottle having an internal cavity, and physical property information of the bottle or environmental information, and a model generation means that generates a trained model for inferring the operation condition of the blow molding machine to be set in the blow molding machine in order to mold a bottle that satisfies a target value or a target quality from the target value or the target quality of the physical property information that the molded bottle should satisfy by using the learning data.

The present invention (disclosure) further provides a method for inferring an operation condition of a blow molding machine and a program for causing a computer to execute the method. The program can be stored in a portable recording medium, for example, a CD-ROM, a semiconductor memory or the like.

### Brief Description of Drawings

[Fig. 1] Fig. 1 is a schematic plan view of a blow molding machine.
[Fig. 2] Fig. 2 illustrates a positional relationship between a preform and a heater zone.
[Fig. 3] Fig. 3 is a longitudinal sectional view of a mold in which the preform is set.
[Fig. 4] Fig. 4 is a functional block diagram of the blow molding machine.
[Fig. 5] Fig. 5 is a block diagram of a learning device.
[Fig. 6] Fig. 6 is a block diagram of an inference device.
[Fig. 7] Fig. 7 illustrates a processing result of the inference device.
[Fig. 8] Fig. 8 is a graph illustrating a relationship between a target value and an actually measured value of an overflow capacity.
[Fig. 9] Fig. 9 is another example indicating the processing result of the inference device.
[Fig. 10] Fig. 10 is still another example indicating the processing result of the inference device.

### Description of Embodiments

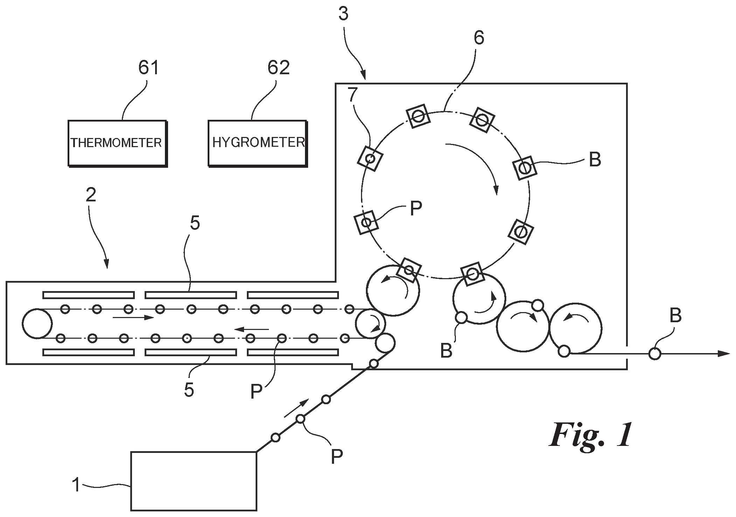

Fig. 1 is a plan view schematically illustrating a blow molding machine.

A large number of preforms P made of a resin, for example, polyethylene terephthalate (PET), are prepared in a preform supply station 1. The preform P is supplied from the preform supply station 1 to a heating station (oven) 2 along a conveyance path. The heating station 2 includes one or a plurality of heater zones 5 (six heater zones 5 are illustrated in Fig. 1), and the preform P passes through the heater zone 5 to be heated to a blow moldable temperature. The number of heater zones 5 can be designed to any number.

The preform P heated in the heating station 2 proceeds to a molding station 3. The molding station 3 includes a rotating wheel 6 and a plurality of molds 7 arranged along the rotating wheel 6 and orbiting in the molding station 3 at a constant speed according to an orbiting operation of the rotating wheel 6. The preforms P supplied to the molding station 3 are each set in the mold 7. Note that, the molding station 3 is not necessarily provided with the rotating wheel 6, and the mold 7 may be linearly conveyed. The number of molds 7 provided in the molding station 3 is also any number.

The mold 7 (a bottom mold 7c of the mold 7 to be described later) includes a cooling water path (not illustrated) through which cooling water passes, and is cooled by cooling water at a predetermined temperature passed through the cooling water path. As described next, when a bottle B is pressed to an inner surface of the mold 7, the bottle B is cooled and solidified.

A stretching rod is inserted into the preform P from a mouth portion of the preform P set in the mold 7, so that the preform P is stretched in an axial direction (longitudinal direction). A fluid, typically compressed air, is blown into the preform P from the mouth portion of the preform P stretched in the axial direction (air blow). The preform P is stretched outward (in the axial direction and a circumferential (radial) direction) by air blow. Air blow is performed in two stages in which, first, air with a weak pressure (hereinafter, referred to as first air) is blown to inflate the preform P, and then air with a high pressure (hereinafter, referred to as second air) is blown to press the preform P to the inner surface of the mold, and as a result, the bottle B having a shape conforming to the shape of the mold 7 is formed. After the compressed air and the stretching rod in the bottle B are removed, the bottle B is taken out of the mold 7. The bottle B that comes out of the molding station 3 proceeds to a subsequent step (not illustrated), for example, a sterilizing step, a beverage filling step, a cap attaching step and the like, so that a bottle containing a beverage is completed.

A thermometer 61 that measures an ambient temperature (indoor temperature) of the blow molding machine and a hygrometer 62 that measures an ambient humidity of the blow molding machine are provided. The temperature measured by the thermometer 61 and the humidity measured by the hygrometer 62 can be used to infer an operation condition of the blow molding machine as described later.

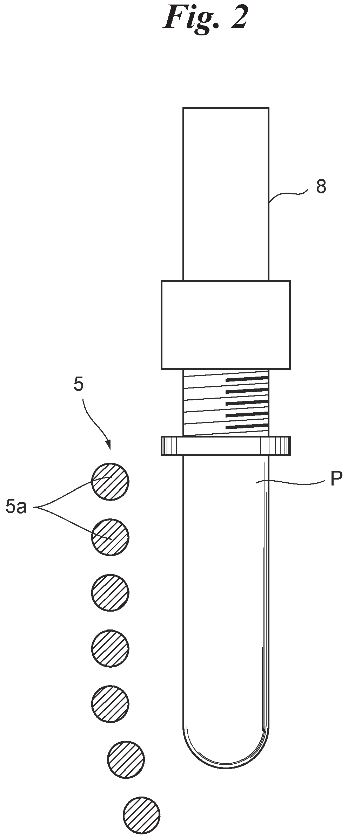

Fig. 2 schematically illustrates a positional relationship between the preform P and the heater zone 5 when the preform P is conveyed in the heating station 2, and schematically illustrates a cross section of the heater zone 5. Fig. 2 also illustrates a spindle 8 for holding and rotating the preform P. In the heating station 2, the preform P is conveyed in the heating station 2 while being rotated by the spindle 8 with its axial direction as a rotation axis.

The heating station 2 provided in the blow molding machine includes the heater zone 5 as described above, in which the preform P is softened so that the preform P can be stretched by the stretching rod and air blow. In a case where a plurality of heater zones 5 is provided, the heater zone 5 includes a type that entirely heats the preform P, a type that intensively heats the periphery of a support ring of the preform P (focus heater), a type that blows air to the entire preform P without providing a heater for heating (surface cleaning), and a type that blows air to a part of the preform P (air knife), and various types can be used, so that heating of the preform P can be finely controlled. The heater zone 5 illustrated in Fig. 2 is of a type that heats the preform P entirely. The plurality of heater zones 5 can each be controlled independently of one another.

The heater zone 5 illustrated in Fig. 2 includes a plurality of (seven in Fig. 2) heaters 5a (for example, halogen lamps) arranged at intervals in the axial direction of the preform P. Each of the seven heaters 5a included in the heater zone 5 can be controlled independently of the others. The number of heaters 5a included in the heater zone 5 can also be any number.

For example, in a case where it is desired to partially increase a thickness of the bottle B molded by the blow molding machine, it is conceivable to lower a heating temperature of a portion of the preform P corresponding to the portion. For example, the heater zone 5 of the type illustrated in Fig. 2 is used to lower an output of the heater 5a (for example, one of the seven heaters 5a) that heats the portion of the preform P corresponding to the portion where the thickness is desired to be increased when the bottle B is molded. The heating temperature of a part of the preform P can be lowered, and a partially thick bottle B can be molded.

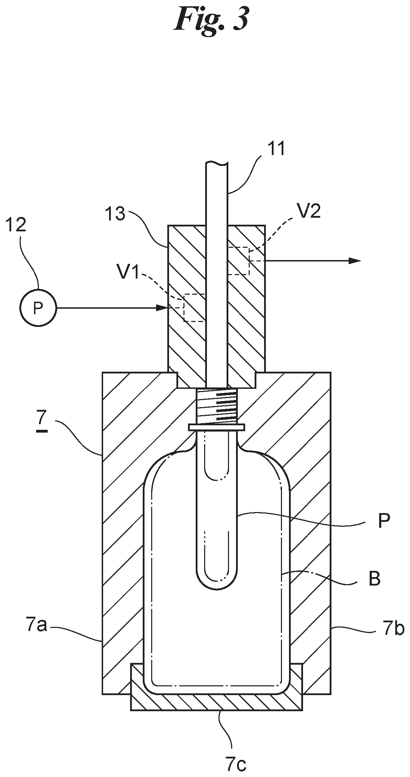

Fig. 3 schematically illustrates a state of blow molding, and illustrates a longitudinal section of the mold 7 in which the preform P is set. In Fig. 3, the cooling water path included in the bottom mold 7c of the mold 7 described above is not illustrated.

The side periphery of the preform P heated in the heating station 2 and delivered to the molding station 3 is surrounded by split molds 7a and 7b forming the mold 7. Lower surfaces of the split molds 7a and 7b are closed by the bottom mold 7c, and a valve block 13 is joined to the mouth portion of the preform P. A stretching rod 11 is inserted into the preform P through a hole formed in the valve block 13. The preform P is stretched in the axial direction by the stretching rod 11.

The valve block 13 includes two valves V1 and V2 therein. Compressed air (first air and second air) from the air pump 12 is fed into the preform P through the valve V1. The first air and the second air described above are sequentially blown into the preform P from the valve V1, so that the preform P is inflated outward to form the bottle B.

After the bottle B is molded, the compressed air in the bottle B is discharged to the outside through the valve V2 of the valve block 13. When the stretching rod 11 is removed from the bottle B and the bottom mold 7c and the split molds 7a and 7b are opened, the completed bottle B is carried out from the blow molding machine.

In the molding station 3, a rod speed (movement speed) of the stretching rod 11, a timing to start blowing the first air, a pressure of the first air, a timing to switch from the first air to the second air, a pressure of the second air and the like can be controlled.

For example, in a case where it is desired to reduce the thickness in the vicinity of the bottom of the bottle B molded by the blow molding machine, it is conceivable to make the timing to start blowing the first air earlier. By supplying the first air before the stretching rod is fully inserted (before the preform P is sufficiently stretched vertically), the thickness of the bottom of the bottle B becomes thin, and instead, the thickness from a neck to the vicinity of a shoulder of the bottle B can be increased.

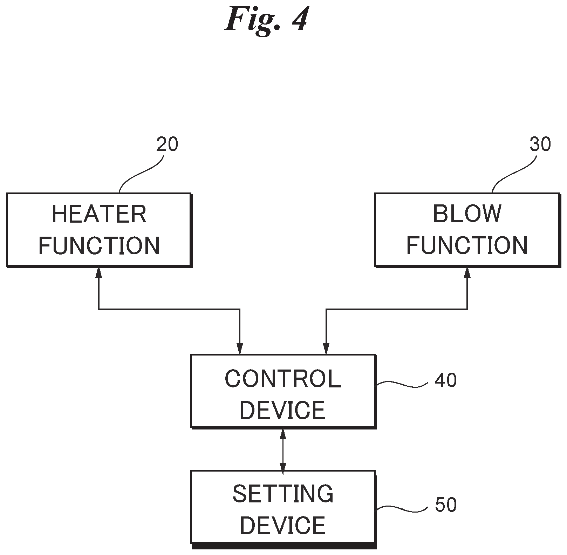

Fig. 4 is a functional block diagram of the blow molding machine.

The blow molding machine is functionally roughly divided into a heater function 20 and a blow function 30. The heater function 20 is implemented by the plurality of heater zones 5 included in the heating station 2 described above. The blow function 30 is implemented by the stretching rod 11, the air pump 12, the valve block 13 and the like included in the molding station 3.

As described above, each of the plurality of heater zones 5 included in the heating station 2 and each of the plurality of heaters 5a included in the heater zone 5 can be individually controlled. The pressure of the air supplied from the air pump 12, a supply timing of the air, and the rod speed (movement speed) of the stretching rod 11 in the molding station 3 can also be controlled. The heater function 20 and the blow function 30 are centrally managed by a control device 40.

A setting device 50 is connected to the control device 40. The setting device 50 includes a display device (not illustrated), and a large number of setting items are displayed on a setting screen displayed on the display device. The control device 40 controls the heater function 20 and the blow function 30 according to setting of the large number of setting items using the setting screen.

In the setting device 50, setting values of the large number of setting items can be set, and the heater function 20 and the blow function 30 of the blow molding machine are finely controlled according to the large number of setting values. By changing the setting values, as described above, for example, a thickness of a specific portion of the bottle B to be finally molded can be increased or decreased.

Specifically, in the setting device 50, preform physical property information such as a material and a weight of the preform P, a bottle molding condition such as a capacity and a shape of the bottle B to be molded, heater setting information such as the output of the heater 5a in the heater zone 5, blow setting information such as the rod speed (movement (insertion) speed) of the stretching rod 11, the timing to start the first air, the pressure of the first air, the timing to switch from the first air to the second air, the pressure of the second air and the like are set. The number of setting items of the blow molding machine is large, and a skilled operator finely adjusts the setting values of the large number of setting items on site. This is because the skilled operator has experienced how to adjust any item out of the large number of setting items and how a result thereof appears in the bottle B.

In order to mechanically implement the adjustment of the fine setting items by the skilled operator, reduce an adjustment work time, and stabilize a quality of the bottle B to be molded, and moreover to adjust the setting items for improving the quality of the bottle B that may not be noticed even by the skilled operator, machine learning is performed as described below in this example. A target value of the physical property information to be satisfied by the bottle B to be molded is given, and an operation condition (a type of setting data to be set in the blow molding machine and a setting value thereof) set in the blow molding machine for molding the bottle B satisfying the target value is inferred as a result of machine learning processing.

As described below, the operation condition of the blow molding machine inferred using the machine learning processing is typically the heater output in the blow molding machine in this example. Additionally or alternatively, a blow pressure may be inferred. In addition to them, the blow timing, the rod speed, the temperature of the cooling water passed through the cooling water path provided in the bottom mold 7c of the mold 7 and the like may also be added as the inferred operation conditions. In any case, the inferred operation conditions of the blow molding machine such as the heater output, the blow pressure, the blow timing, the rod speed, and the cooling water temperature have a correlation with the physical property of the bottle B molded from the preform P by the blow molding machine.

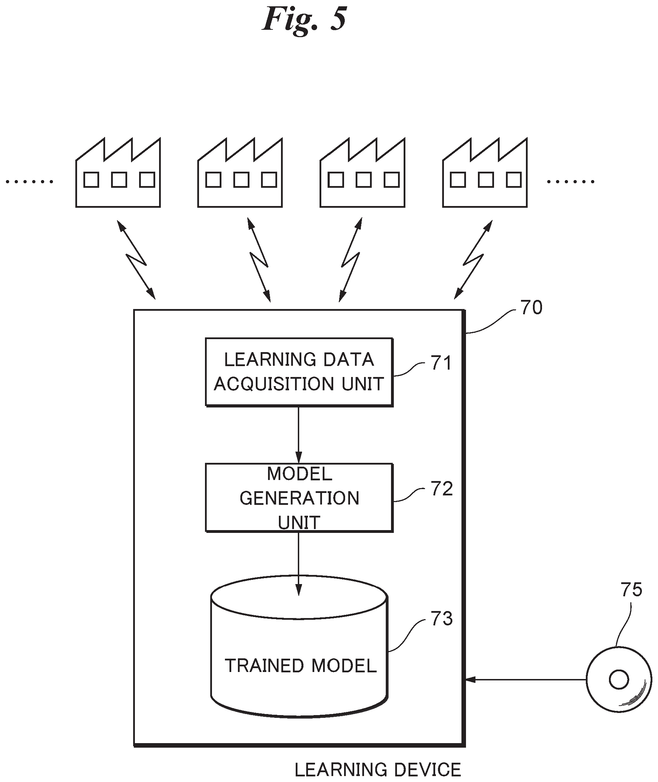

Fig. 5 is a block diagram of a learning device 70. The learning device 70 performs machine learning regarding the blow molding machine, and includes a learning data acquisition unit 71 that acquires learning data that is data used for learning, a model generation unit 72 that generates a learning model used to infer the heater output, the blow output, the blow timing, the rod speed, the cooling water temperature and the like of the blow molding machine using the learning data, and a trained model 73 (a storage unit thereof) to be generated. The learning device 70 is implemented by, for example, a computer device including a processor, a memory, a storage device, a communication device and the like, and operates according to a program that causes the computer device to implement a function of the learning device 70. When the program stored in a portable recording medium 75 is installed in the computer device, the computer device functions as the learning device 70.

The learning data acquisition unit 71 acquires (receives), as the learning data, data that was set or measured when the bottle B is actually formed from a plurality of bottle molding plants (bottled beverage manufacturing plants) in which the blow molding machine is installed, through a network (for example, the Internet). The learning data includes the following data.

### (1) Heater Output

The heater output is the output of the plurality of heater zones 5 included in the heating station 2 of the blow molding machine. The data representing the heater output may be an output ratio (total output) (for example, 80% and the like) to the maximum output of the entire heating station 2, each heater zone 5, or each heater 5a, or may be on/off data of the plurality of heaters 5a included in the heater zone 5.

### (2) Blow Pressure

The blow pressure includes values of the pressures of the first air and the second air blown into the preform P.

### (3) Blow Timing

The blow timing includes the start timing of the first air and the timing (switching timing) at which the first air is switched to the second air. In place of the switching timing, a combination of an end timing of the first air and a start timing of the second air may be used. As the data representing the blow timing, a rotation angle of the rotating wheel 6 with a position at which the preform P is delivered to the molding station 3 as a reference (0°) can be used. For example, if the start timing of the first air is "33°", this means that the first air is started at a timing when the preform P is delivered to the molding station 3 and rotated by 33° by the rotating wheel 6.

### (4) Rod Speed

The rod speed is a movement (insertion) speed of the stretching rod 11 inserted into the preform P.

### (5) Preform Physical Property Information

The preform physical property information includes the material, the weight, a dimension and the like of the preform P. The information regarding the material of the preform P may include data for distinguishing whether the preform P is made of a virgin resin (new resin) or a recycled resin (used resin). An intrinsic viscosity (IV) value of a PET resin used for the preform P may be included. The dimensions generally include a diameter of an opening of the preform P, a diameter of a body, and a length (body length) from the support ring to a lower end.

### (6) Bottle Molding Condition

The Bottle molding condition includes a capacity and a shape of the bottle B. The shape of the bottle B is generally classified into a round shape and a rectangular shape.

### (7) Environmental Information

The environmental information includes measured values of the temperature and humidity around the blow molding machine. They are measured by the thermometer 61 and the hygrometer 62.

### (8) Bottle Physical Property Information

The bottle physical property information includes measured values of an overflow capacity, buckling strength, a total height, a thickness, and a section weight (weight of each of the portions divided by cutting the bottle B sideways (at a right angle to the axial direction) at one or a plurality of predetermined sites) of the molded bottle B. As for the thickness and the section weight, values of a plurality of sites of the bottle B, for example, the neck, the shoulder, the body, and the bottom (which may be finer) are generally used.

### (9) Bottle Appearance Information

The bottle B molded from the preform P may turn cloudy white (be whitened). The presence or absence of this whitening is included in the bottle appearance information. Presence or absence of a structural defect of the bottle B may be included in the bottle appearance information. The whitening includes two types including whitening due to overstretching and whitening due to crystallization. Whitening due to overstretching is likely to occur when heating of the preform P is insufficient, and whitening due to crystallization occurs when the preform P is excessively heated and the material of the preform P is crystallized.

### (10) Cooling Water Temperature of Mold

The cooling water temperature of mold is the temperature of the cooling water passed through the cooling water path for cooling the bottom mold 7c of the mold 7 described above.

The model generation unit 72 learns the learning data from the learning data acquisition unit 71 and generates a trained model for inferring operation conditions to be set in the blow molding machine in order to mold the bottle B satisfying the target, specifically, the heater output, the blow pressure, the blow timing, the rod speed, the cooling water temperature and the like.

Known algorithms such as supervised learning, unsupervised learning, and reinforcement learning can be used as the learning algorithm used by the model generation unit 72.

For example, LightGBM, which is a learning algorithm with high prediction accuracy and short time required for training, can be used. The trained model 73 expresses a relationship between explanatory variables (specifically, the physical property information of the bottle, preform physical property information, the bottle molding condition, environmental information and the like) and objective variables (the heater output, blow pressure, blow timing, rod speed, cooling water temperature and the like of the blow molding machine), and learns parameters for calculating values of the objective variables. External setting variables (hyperparameters) (such as the number of branches of a decision tree) for managing training of the learning model are optimized, for example, by a Bayesian optimization library.

As the output data (objective variables) of the trained model 73, data that greatly affects the physical property of the bottle B molded by the blow molding machine may be preferentially selected. Here, an example in which five pieces of data including the heater output, the blow pressure, the blow timing, the rod speed, and the cooling water temperature of the blow molding machine are treated as the output data will be particularly described; however, more types of data may be treated as the output data, or conversely, less types of data, for example, only the data of the heater output, or two pieces of data of the heater output and the blow pressure (in particular, the pressure of the first air) may be treated as the output data. In LightGBM, since the degree of importance (degree of influence) of the explanatory variable that affects the objective variable is calculated for each explanatory variable, in a case where attention is paid to a bottle physical property of interest (for example, overflow capacity) (one of the explanatory variables), data (objective variable) that greatly affects the bottle physical property of interest may be selected as the output data of the trained model 73.

It is of course possible to limit the input data (explanatory variable) of the trained model 73 to, for example, the physical property information of the bottle B molded by the blow molding machine (for example, overflow capacity as one of them). Furthermore, for example, in a case where the physical property information of the bottle B to be molded is fixed, the input data of the trained model 73 can be limited to the environmental information (one or both of temperature and humidity). However, when a plurality of types of input data is used, there is a high possibility that setting items and setting values that the operator does not notice are inferred.

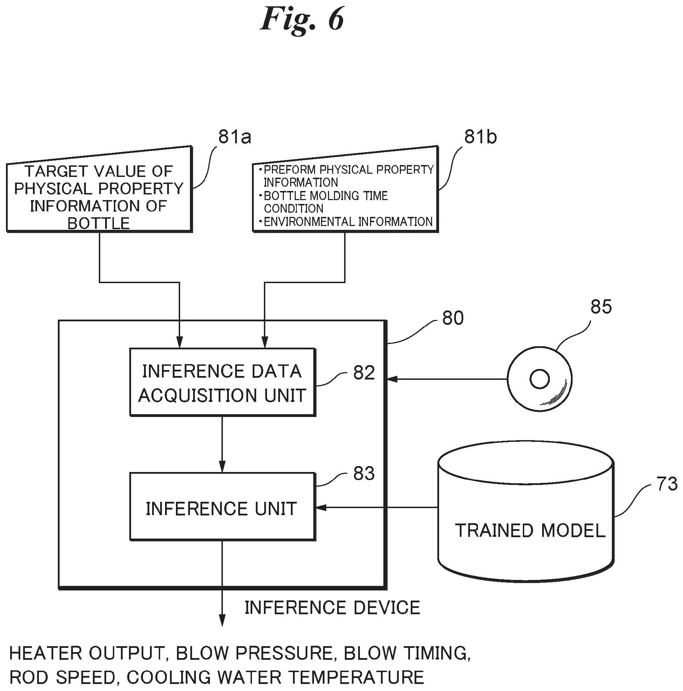

Fig. 6 is a block diagram of an inference device for inferring the operation condition set in the blow molding machine.

An inference device 80 includes an inference data acquisition unit 82 and an inference unit 83. The inference device 80 also is implemented by, for example, a computer device including a processor, a memory, a storage device, a communication device and the like, and operates according to a program that causes the computer device to implement a function of the inference device 80. When the program stored in a portable recording medium 85 is installed in the computer device, the computer device functions as the inference device 80.

To the inference data acquisition unit 82, a target value (design value) (at least one of an overflow capacity, buckling strength, a total height, a thickness, and a section weight) 81a of the physical property information of the bottle B to be molded is given, and preferably, physical property information of the preform P used for molding the bottle B (for example, at least one of the material and the weight of the preform P), bottle molding condition (at least one of the bottle capacity and the shape), and environmental information (at least one of the temperature and the humidity) 81b are given.

The inference unit 83 uses the trained model 73 to infer the operation conditions of the blow molding machine, here, the heater output, the blow pressure, the blow timing, the rod speed, and the cooling water temperature. That is, the inference unit 83 inputs inference data acquired by the inference data acquisition unit 82 to the trained model 73, thereby outputting the heater output, the blow pressure, the blow timing, the rod speed, and the cooling water temperature such that the generated bottle has target physical property information.

The target (value) of the physical property information of the bottle to be molded may be a specific numerical value or a numerical range having a predetermined width. As for the thickness and the section weight, values of a plurality of sites of the bottle B, for example, the neck, the shoulder, the body, and the bottom are generally set.

By using the trained model 73 learned by using a large number of learning data, it is possible to cause the inference device 80 to output the heater output, the blow pressure, the blow timing, the rod speed, and the cooling water temperature to be set in the setting device 50 of the blow molding machine in order to generate the bottle B having physical properties that satisfy the target or fall within the target range. Data of the heater output, the blow pressure, the blow timing, the rod speed, and the cooling water temperature output from the inference device 80 is given as setting data to the setting device 50 of the blow molding machine, and the blow molding machine operates according to the given setting data. It is possible to manufacture the bottle B satisfying the target physical properties under the operation conditions of the blow molding machine as if set by a skilled operator, and further under the operation conditions of the blow molding machine that cannot be noticed even by a skilled operator.

As described above, since the learning data includes the bottle appearance information, it is also possible to cause the inference device 80 to output the heater output, the blow pressure, the blow timing, the rod speed, and the cooling water temperature to be set in the setting device 50 of the blow molding machine in order to generate the bottle B having target physical properties and no abnormality in appearance (for example, no whitening). A higher quality bottle B can be molded.

In place of or in addition to the target value of the physical property information to be satisfied by the bottle B after molding, attention can be paid to the quality of the bottle B to be satisfied by the bottle B to be molded (target quality of the bottle B). In this case, the quality (distinction as to whether blow molding could be performed or not, presence or absence of core misalignment, presence or absence of adhesion of dew condensation water and the like) of the bottle B is learned in the trained model 73, and the inference device 80 infers the operation condition to be set in the blow molding machine in order to mold the bottle B satisfying the target quality according to the trained model 73.

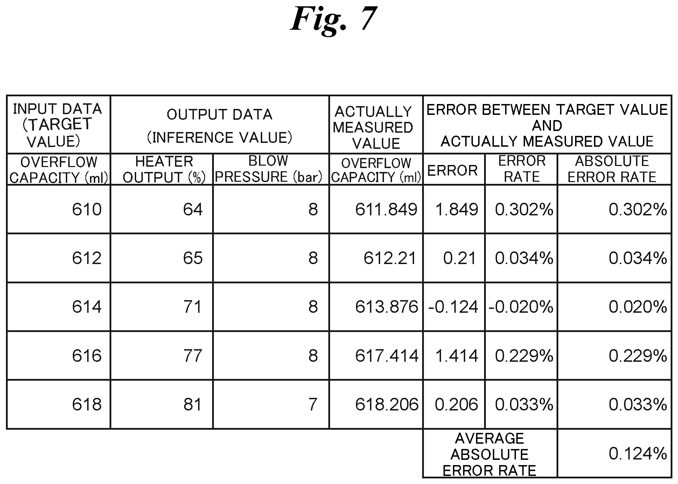

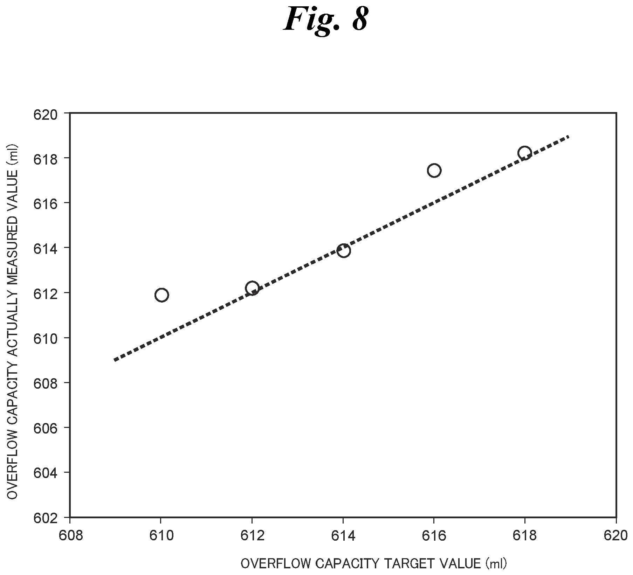

Fig. 7 illustrates a processing result of the inference device 80 using the trained model 73 in which "bottle capacity (600 ml)" and "bottle shape (round shape)" are set as the bottle molding conditions, "overflow capacity" (ml) is set as the target value (explanatory variable, input data) of the physical property information of the bottle to be molded, and two operation conditions of the blow molding machine including "heater output" (%) (total output) and "blow pressure" (pressure of first air) (bar) are set as inference values (objective variables, output data). Fig. 7 also illustrates an actually measured value of the overflow capacity of each of five bottles B actually molded from five preforms P of the same type by setting the heater output and the blow pressure inferred when the target value of the overflow capacity is made different in the blow molding machine, and an error between the target value and the actually measured value. The "error between the target value and the actually measured value" also indicates an "error (= actually measured value - target value)", an "error rate (= error/actually measured value)", an "absolute error rate (= absolute value of error rate)", and an "average absolute error rate (= sum of absolute error rates/number of data)". Fig. 8 is a graph in which the horizontal axis represents the target value of the overflow capacity and the vertical axis represents the actually measured value of the overflow capacity, in which the target value and the actually measured value of each of the five data are plotted by circles. A broken line in the graph of Fig. 8 is an auxiliary line indicating a case where the target value and the actually measured value match.

The average absolute error rate of the five data was as small as 0.124%, and it was confirmed that the bottle B having the overflow capacity considerably close to the target value can be molded by molding the bottle B using the heater output and the blow pressure inferred using the trained model 73.

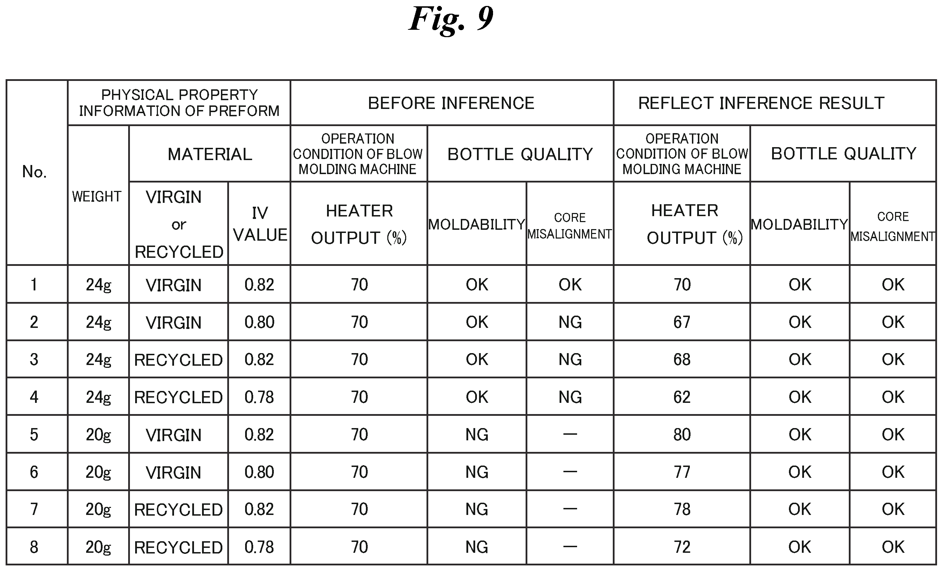

Fig. 9 illustrates an inference result of the inference device 80 using the trained model 73 in which the "weight", distinction between "virgin resin/recycled resin", and an intrinsic viscosity (IV) value (intrinsic viscosity (extreme viscosity) of the resin), which are the physical property information of the preform P, are set as input data, and "heater output" (%) (total output), which is one of the operation conditions of the blow molding machine, is set as an inference value (output data).

Fig. 9 further illustrates a bottle quality (here, moldability and core misalignment) ("reflecting inference result") of each of eight bottles B molded by setting the heater output inferred when the input data (any of weight, distinction between virgin material/recycled material, and IV value) is made different in the blow molding machine, and a bottle quality ("before inference") of each of the eight bottles B molded by the blow molding machine in which the heater output (total output) is fixed at 70% without controlling the heater output based on the inference value. "OK" of "moldability" indicates that blow molding could be performed, and "NG" indicates that no blow molding could be performed (that the bottle B whose shape had collapsed was molded). "Core misalignment" means that the center of the entire bottle B and the center of the bottom of the bottle B are misaligned (misalignment), in which "OK" means that no core misalignment has occurred and "NG" means that the core misalignment has occurred.

When No. 1 and No. 3 are compared, they are the same in the weight and IV value of the preform P, but are different in that the preform P made of a virgin resin (new resin) is used (No. 1), and the preform P made of a recycled resin (used resin) is used (No. 3). When No. 1 and No. 3 are compared, a fact that the preform P is made of a recycled resin is given as one of the input data (No. 3), so that the heater output (68%) lower than the heater output (70%) for the preform P of No. 1 made of a virgin resin is inferred for No. 3. As a result, as for No. 3, the occurrence of core misalignment that has occurred when the heater output was set to 70% could be eliminated. This inference result coincides with the measure obtained from the past experience that the recycled resin preform P tends to be softer when heated than the virgin resin preform P, and therefore core misalignment easily occurs, and the temperature of the preform after heating is lowered in a case where the recycled resin preform is used to prevent this.

When No. 1 and No. 2 are compared, they are the same in the weight of the preform P and in that they are made of a virgin resin, but are different in intrinsic viscosity (limiting viscosity) of a PET resin represented by the IV value. When No. 1 and No. 2 are compared, the IV value = 0.80 is given as one of the input data (No. 2), so that the heater output (67%) lower than the heater output (70%) for the preform P of No. 1 made of a PET resin of IV value = 0.82 is inferred for No. 2. As a result, as for No. 2, the occurrence of core misalignment that has occurred when the heater output was set to 70% could be eliminated. This inference result coincides with the measure obtained from the past experience that the preform made of a PET resin having a low IV value tends to be softer when heated, so that the core misalignment easily occurs, and in order to prevent this, in a case of using the preform made of a PET resin having a low IV value, the preform temperature after heating is lowered.

When No. 1 and No. 5 are compared, the preforms P are made of virgin resins and have the same IV value of a PET resin, but they are different in weight. When No. 1 and No. 5 are compared, by giving the weight as one of the input data, the heater output (80%) larger than the heater output (70%) for the preform P of No. 1 is inferred for No. 5 lighter than No. 1. As a result, the bottle B can be normally molded from the preform P for No. 5. This inference result coincides with the measure obtained from the past experience that the heating temperature of the preform should be increased in order to eliminate the molding abnormality in the light preform.

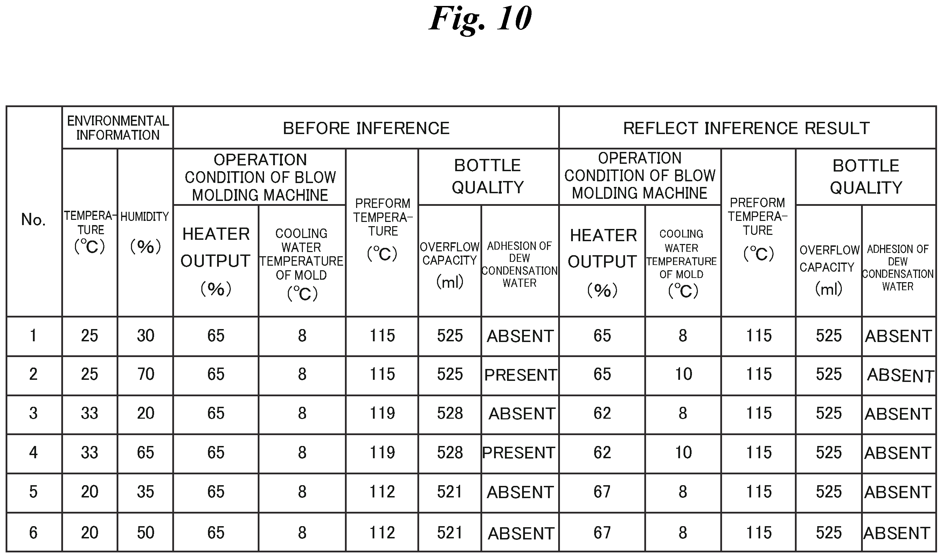

Fig. 10 illustrates an inference result of the inference device 80 using the trained model 73 in which the "temperature" and "humidity" around the blow molding machine, which are the environmental information, are used as the input data, and the "heater output" (%) (total output) and the "cooling water temperature of the mold" (°C), which are the operation conditions of the blow molding machine, are used as the inference values (output data).

Fig. 10 illustrates the bottle quality (overflow capacity and adhesion of dew condensation water) and the preform temperature of each of six bottles B molded by setting the heater output and the cooling water temperature of the mold inferred when the input data (any of the temperature and the humidity around the blow molding machine) is made different in the blow molding machine, and the bottle quality and the preform temperature of each of the six bottles B molded by the blow molding machine in which the heater output (total output) is fixed to 65% and the cooling water temperature of the mold is fixed to 8°C.

When No. 1 and No. 3 are compared, they are relatively close in humidity (30% and 20%) but different in temperature (25°C for No. 1, and 33°C for No. 3). When No. 1 and No. 3 are compared, by giving the temperature (= 33°C) as one of the input data (No. 3), the heater output (62%) lower than the heater output (65%) for No. 1 when the temperature is 25°C is inferred. As a result, it was possible to eliminate the deviation (528 ml) from the target (525 ml) of the overflow capacity of the bottle B generated when the heater output was set to 65%. This inference result coincides with the measure obtained from the past experience that, when an ambient temperature of the blow molding machine is high, the temperature of the heated preform P becomes high and the overflow capacity of the bottle B increases, so that in order to prevent this, the output of the heater is lowered when the ambient temperature of the blow molding machine is high to make the temperature of the preform P constant.

When No. 1 and No. 5 are compared, they are relatively close in humidity (30% and 35%) but different in temperature (25°C for No. 1, and 20°C for No. 5). When No. 1 and No. 5 are compared, by giving the temperature (= 20°C) as one of the input data (No. 5), the heater output (67%) higher than the heater output (65%) for No. 1 when the temperature is 25°C is inferred. As a result, it was possible to eliminate the deviation (521 ml) from the target (525 ml) of the overflow capacity of the bottle B generated when the heater output was set to 65%. This inference result coincides with the measure obtained from the past experience that, when an ambient temperature of the blow molding machine is low, the temperature of the heated preform P becomes low and the overflow capacity of the bottle B decreases, so that in order to prevent this, the output of the heater is increased when the ambient temperature of the blow molding machine is low to make the temperature of the preform P constant.

When No. 1 and No. 2 are compared, the temperature is the same but the humidities are different (30% for No. 1, and 70% for No. 2). When No. 1 and No. 2 are compared, by giving the humidity (= 70%) as one of the input data (No. 2), the cooling water temperature (10°C) higher than the cooling water temperature (8°C) of the mold for No. 1 when the humidity is 30% is inferred. As a result, when the cooling water temperature of the mold was set to 8°C, the occurrence of adhesion of generated dew condensation water could be prevented. This inference result coincides with the measure obtained from the past experience that, when the humidity around the blow molding machine is high, a defect in which dew condensation occurs in the mold and the dew condensation water adheres to the bottle B is likely to occur, and in order to prevent this, the cooling water temperature of the mold is increased to prevent dew condensation from occurring when the humidity around the blow molding machine is high.

### Reference Signs List

- 1: Preform supply station
- 2: Heating station
- 3: Molding station
- 5: Heater zone
- 5a: Heater
- 7: Mold
- 11: Stretching rod
- 12: Air pump
- 13: Valve block
- 20: Heater function
- 30: Blow function
- 40: Control device
- 50: Setting device
- 61: Thermometer
- 62: Hygrometer
- 70: Learning device
- 71: Learning data acquisition unit
- 72: Model generation unit
- 73: Trained model
- 75, 85: Recording medium
- 80: Inference device
- 82: Inference data acquisition unit
- 83: Inference unit
- B: Bottle
- P: Preform

## Claims

1. An operation condition inference device of a blow molding machine that heats a preform by a heater, moves the heated preform to a mold, inserts a stretching rod into the preform to stretch the preform in an axial direction, and stretches the preform outward by supplying a pressurized fluid to the inside of the preform, thereby molding a bottle having an internal cavity, the operation condition inference device comprising:
a trained model of which parameters are trained so that physical property information of a bottle or environmental information is used as input data and an operation condition of the blow molding machine is used as output data; and
an inference means that infers the operation condition of the blow molding machine to be set in the blow molding machine in order to mold a bottle that satisfies a target value or a target quality, the operation condition being inferred by inputting the target value of the physical property information or environmental information to be satisfied by the molded bottle to the trained model.

2. The operation condition inference device of a blow molding machine according to claim 1, wherein
the input data further includes at least one of physical property information of the preform or a bottle molding condition.

3. The operation condition inference device of a blow molding machine according to claim 1, wherein
the operation condition of the blow molding machine is at least one of a heater output condition for heating the preform and a pressure condition of a fluid supplied to the preform.

4. The operation condition inference device of a blow molding machine according to claim 3, wherein
the operation condition of the blow molding machine further includes a timing condition for supplying a fluid to the preform or a speed condition of the stretching rod inserted into the preform.

5. The operation condition inference device of a blow molding machine according to claim 1, wherein
the input data includes information regarding presence or absence of an appearance abnormality of the bottle, and
the inference means
infers the operation condition of the blow molding machine to be set in the blow molding machine in order to mold a bottle that satisfies the target value or the target quality and has no abnormality in appearance.

6. The operation condition inference device of a blow molding machine according to claim 2, wherein
the physical property information of the preform includes data regarding a material and a weight of the preform.

7. The operation condition inference device of a blow molding machine according to claim 2, wherein
the physical property information of the preform includes data for distinguishing whether the preform is made of a virgin resin or a recycled resin.

8. The operation condition inference device of a blow molding machine according to claim 2, wherein
the physical property information of the preform includes an IV value of the preform.

9. The operation condition inference device of a blow molding machine according to claim 2, wherein
the bottle molding condition includes data regarding a capacity and a shape of the bottle.

10. The operation condition inference device of a blow molding machine according to claim 1, wherein
the physical property information of a bottle includes at least one of an overflow capacity, buckling strength, a total height, a thickness, or a section weight of the bottle.

11. The operation condition inference device of a blow molding machine according to claim 1, wherein
the environmental information includes at least one of temperature and humidity around the blow molding machine.

12. The operation condition inference device of a blow molding machine according to claim 1, comprising:
a setting means that sets the operation condition of the blow molding machine inferred by the inference means in the blow molding machine.

13. A learning device comprising:
a learning data acquisition means that acquires learning data including an operation condition of a blow molding machine that heats a preform by a heater, moves the heated preform to a mold, inserts a stretching rod into the preform to stretch the preform in an axial direction, and stretches the preform outward by supplying a pressurized fluid to the inside of the preform, thereby molding a bottle having an internal cavity, and physical property information of the molded bottle or environmental information; and
a model generation means that generates a trained model for inferring the operation condition of the blow molding machine to be set in the blow molding machine in order to mold a bottle that satisfies a target value or a target quality from the target value or the target quality of the physical property information that the bottle after molding should satisfy by using the learning data.

14. An operation condition inference method of a blow molding machine that heats a preform by a heater, moves the heated preform to a mold, inserts a stretching rod into the preform to stretch the preform in an axial direction, and stretches the preform outward by supplying a pressurized fluid to the inside of the preform, thereby molding a bottle having an internal cavity, the operation condition inference method comprising:
preparing a trained model of which parameters are trained so that physical property information of a bottle or environmental information is used as input data and an operation condition of the blow molding machine is used as output data; and
inferring the operation condition of the blow molding machine to be set in the blow molding machine in order to mold a bottle that satisfies a target value or a target quality, the operation condition being inferred by inputting the target value of the physical property information to be satisfied by the bottle after molding or environmental information to the trained model.

15. A program for causing a computer to execute the method according to claim 14.
